# EUROPÄISCHE PATENTSCHRIFT

(11) **EP 1 288 122 B1**
(45) Veröffentlichungstag und Bekanntmachung des Hinweises auf die Patenterteilung: **12.05.2010**
(21) Anmeldenummer: 02015395.3
(22) Anmeldetag: 11.07.2002
(51) Int. Cl.: B63B 35/44, B63B 21/50, F03D 11/04, B63B 9/06, B63B 5/16

(54) **Schwimmfundament für ein über die Wasseroberfläche aufragendes Bauwerk**
Floating support for a construction extending above the water surface
Support flottant pour une construction s'élevant au dessus de la surface de l'eau

(30) Priorität: 30.08.2001 AT 13732001; 15.10.2001 AT 16162001
(43) Veröffentlichungstag der Anmeldung: 05.03.2003
(73) Patentinhaber: RUND-STAHL-BAU GESELLSCHAFT M.B.H., A-6972 Fussach (AT)
(72) Erfinder: Mathis, Hugo, Mag. Dipl. Ing., 6900 Bregenz (AT)
(74) Vertreter: Hofmann, Ralf U.

(56) Entgegenhaltungen:
- DE-B- 1 267 129
- US-A- 5 421 676
- KERR D: "SUPPORT STRUCTURES FOR AN OFFSHORE ARRAY OF VERTICAL AXIS WIND TURBINES -A DESIGN STUDY" WIND ENGINEERING, MULTI-SCIENCE PUBLISHING CO., BRENTWOOD, ESSEX, GB, Bd. 10, Nr. 1, 1. Januar 1986 (1986-01-01), Seiten 47-61, XP001014352 ISSN: 0309-524X

## Beschreibung

Die Erfindung betrifft ein Schwimmfundament für ein über die Wasseroberfläche aufragendes Bauwerk, insbesondere einen Offshore-Windturm einer Windenergieanlage, wobei das Schwimmfundament mindestens einen Auftriebskörper umfaßt, der sich in der Endlage des Schwimmfundaments vollständig unterhalb der Wasseroberfläche befindet und in dem ein Luftvolumen enthalten ist, und das Schwimmfundament über im Untergrund verankerte Spannvorrichtungen nach unten gegen die Kraft des Auftriebs des mindestens einen Auftriebskörpers in seine Endlage vorgespannt ist und wobei der Auftrieb des Schwimmfundaments in seiner nach unten vorgespannten Endlage um mindestens 10%, vorzugsweise um mindestens 20%, größer ist als der für die Aufrechterhaltung eines Schwebezustandes des Schwimmfundaments unter der Gewichtsbelastung des von ihm getragenen Bauwerks in dieser Endlage des Schwimmfundaments erforderliche Auftrieb

Bei Windkraftanlagen werden üblicherweise eine Mehrzahl von Windtürmen vorgesehen, bei denen jeweils ein Windrad an einem beispielsweise aus Stahlbeton bestehenden Windturm angebracht ist. Nachdem die vorhandenen Landplätze für Windkraftanlagen begrenzt sind, werden in letzter Zeit Windkraftanlagen im Offshore-Bereich in Erwägung gezogen. Bei geringen Wassertiefen wurde hierbei eine Verankerung der Windtürme im Untergrund mittels massiver Betonfundamente vorgeschlagen. Dies erfordert aufwendige Unterwasserarbeiten, die von Tauchern auszuführen sind, beispielsweise die Vorbereitung und Einebnung des Untergrundes, auf dem das Betonfundament aufzusetzen ist. Weiters müssen geeignete in den Untergrund reichende Schürzen vorgesehen werden, um der Gefahr des Auskolkens vorzubeugen. Auch Pfahlfundamente in der Form von Monopiles, die in den Untergrund mit einer relativ großen Einbringtiefe eingeschlagen werden, wurden in Erwägung gezogen.

Bei größeren Wassertiefen von dreißig bis fünfzig Metern, wie sie an für Windkraftanlagen geeigneten Orten oft vorliegen, wurden ebenfalls Schwergewichtsgründungen in Form von Betonfundamenten vorgeschlagen, wobei hier Konstruktionen nach Art eines Dreibeins vorzusehen sind. Aufgrund der hohen Wassertiefe ist hier der Herstellungsaufwand noch größer. Auch hier bestehen Gefahren der Unterspülung der Gründung, denen mit in den Untergrund reichenden Schürzen versucht wird zu begegnen. Weiters kommen für solche Wassertiefen ebenfalls konventionelle Pfahlfundamente in Betracht, die in diesem Fall als Pfahlgruppe, insbesondere nach Art eines Dreibeins auszuführen sind. Solche Pfahlgruppen sind nicht für alle Untergründe geeignet. Bei relativ großen Wassertiefen ist die Masse der Konstruktion groß und die Einbringung der Pfahlgruppen in den Untergrund problematisch.

Bekannt sind weiters Schwimmfundamente, wie sie beispielsweise bei Bohrinseln eingesetzt werden. Solche Schwimmfundamente umfassen Auftriebskörper, die das Gewicht des aufragenden Bauwerks tragen. Das Bauwerk besitzt einen unterhalb der Wasseroberfläche sich befindenden Teil sowie einen über die Wasseroberfläche aufragenden Teil, der bei einer Bohrinsel einen Bohrturm umfaßt. Der Auftrieb der Auftriebskörper des Schwimmfundaments zusammen mit dem vom Unterwasserteil des Bauwerks herrührenden Auftrieb entsprechen in Summe gerade dem Gewicht der gesamten Konstruktion, d. h. die gesamte Konstruktion schwimmt im Wasser, wobei sich das Schwimmfundament bzw. die Auftriebskörper des Schwimmfundaments unterhalb der Wasseroberfläche befinden und einen Gleichgewichts- bzw. Schwebezustand einnehmen. Um den vorgesehenen Ort über dem Meeresuntergrund beizubehalten, ist das Schwimmfundament über Kabel bzw. Seile gegenüber horizontalen Verschiebungen relativ zum Untergrund verankert. Diese Kabel bzw. Seile laufen dabei vom Schwimmfundament unter einem Winkel zur Vertikalen beispielsweise von etwa 45° zum Untergrund und sind in diesem mit herkömmlichen Ankern befestigt.

Solche Anker sind je nach Untergrund unterschiedlich ausgebildet und beispielsweise in Form von Felsankern für Felsböden und Zugankern für Kiesböden bekannt. In einer herkömmlichen Ausführungsform sind hierbei die das Kabel bildenden Stränge am Ende des Kabels offen (aufgefranst). Das Kabel wird in eine in den Untergrund eingebrachte Bohrung eingesetzt, wobei ein Injektionsrohr bis zum vorderen Ende des Kabels verläuft, und durch dieses Injektionsrohr wird Mörtel eingepreßt, der die Verankerung im Untergrund bewirkt. Auch andere Ausführungsformen solcher Anker, die auch rein mechanisch mittels Klappmechanismen oder dergleichen verankert werden, sind bekannt.

Ein Nachteil solcher herkömmlicher Schwimmfundamente besteht darin, daß sie nur eine relativ geringe Stabilität gegenüber Verkippungen aufgrund einwirkender Querkräfte aufweisen. Solche Querkräfte treten insbesondere durch Strömungen, die auf das Schwimmfundament und den unter Wasser liegenden Teil des Bauwerks einwirken, und durch auf den aus dem Wasser aufragenden Teil des Bauwerks einwirkenden Wind auf.

Unter die Wasseroberfläche vorgespannte Schwimmfundamente für Ölförderplattformen sind aus der US-PS 5,421,676, die alle Merkmale des Oberbegriffs des Anspruchs 1 beschreibt, und US-PS 5,964,550 bekannt. Diese Schwimmfundamente weisen jeweils mehrere als geschlossene Stahltanks ausgebildete Schwimmkörper auf. Die Verspannung gegen den Untergrund erfolgt jeweils mittels mehreren vertikal verlaufenden Kabeln bzw. Trossen, die an Konsolen angreifen, welche an den Außenseiten der Auftriebskörper angeschweißt sind.

Ein unterhalb der Wasseroberfläche angeordneter Schwimmkörper, der mehrere Windtürme trägt, ist aus der WO 00/58621 bekannt. Der Schwimmkörper ist mittels eines Ankers über eine oder mehrere Kabel bzw. Trossen drehbar am Meeresgrund verankert, wobei der Schwimmkörper unter der Wasseroberfläche liegt. Die Kabel bzw. Trossen verlaufen geneigt zur Vertikalen und der Schwimmkörper besteht aus einer Stahlkonstruktion, welche geschlossene Kammern aufweist.

Aufgabe der Erfindung ist es, ein verbessertes Schwimmfundament der eingangs genannten Art bereitzustellen, das einen einfachen Aufbau, eine kostengünstige Herstellung bzw. Montage und einen geringen Wartungsaufwand, dies bei einer sehr guten Stabilität, aufweist. Erfindungsgemäß gelingt dies durch ein Schwimmfundament mit den Merkmalen des Anspruchs 1.

Beim einem solchen Schwimmfundament wird die Stabilität des Fundaments nicht bzw. nicht nur durch das Schwimmverhalten des Fundaments erreicht, sondern auch durch die mittels der Spannvorrichtungen auf das Fundament ausgeübte Vorspannung nach unten.

In einem vorteilhaften Ausführungsbeispiel beträgt der Abstand des Schwimmfundaments zur Wasseroberfläche in der Endlage des Schwimmfundaments mindestens zehn Meter. In dieser Tiefe sind die durch Wind und Wellen in geringeren Wassertiefen hervorgerufenen Strömungen bereits zu einem Großteil abgeklungen, so daß die auf das Schwimmfundament einwirkenden Strömungskräfte gering sind. Vorteilhafterweise ist weiters vorgesehen, daß der Abstand des Schwimmfundaments zum Untergrund in der Endlage des Schwimmfundaments weniger als zehn Meter beträgt. Die Verankerung wird dadurch vereinfacht und verbessert.

Vorteilhaft ist es weiters, wenn die Spannvorrichtungen des Schwimmfundaments sowohl von Stangen oder Kabeln, die im wesentlichen vertikal verlaufen (d. h. in einem Winkel, der weniger als 20° zur Vertikalen geneigt ist), als auch von Stangen oder Kabeln gebildet werden, die gegenüber der Vertikalen geneigt sind (beispielsweise in einem Winkel im Bereich zwischen 25 und 45°), wobei diese Stangen oder Kabel jeweils über Anker im Untergrund verankert sind.

Ein nicht gattungsgemäßes, auf dem Meeresgrund angeordnetes und in diesem direkt veranktertes Fundament ist aus der US-PS 720,997 bekannt. Dieses Fundament weist eine Mehrzahl von nach unten offenen Kammern auf, in welche nach Art eines Caissons Luft eingefüllt werden kann, um von einer solchen Luft befüllten Kammer aus Arbeiten zur Verankerung des Fundaments im Untergrund durchzuführen. Weiters kann das Fundament mittels dieser Kammern schwimmend zu seinm Einsatzort gebracht werden.

Weitere Vorteile und Einzelheiten der Erfindung werden im folgenden anhand der beiliegenden Zeichnung erläutert. Darin zeigen:
- die Fig. 1 bis 6: in schematisierter Form Arbeitsschritte bei der Fertigstellung des Schwimmfundaments mit einem darauf verankerten Windturm;
- die Fig. 7 und 8: Grundrisse zweier unterschiedlicher Ausführungsformen des Schwimmfundaments und
- Fig. 9: eine etwas modifizierte Verankerung des Schwimmfundaments im Untergrund.

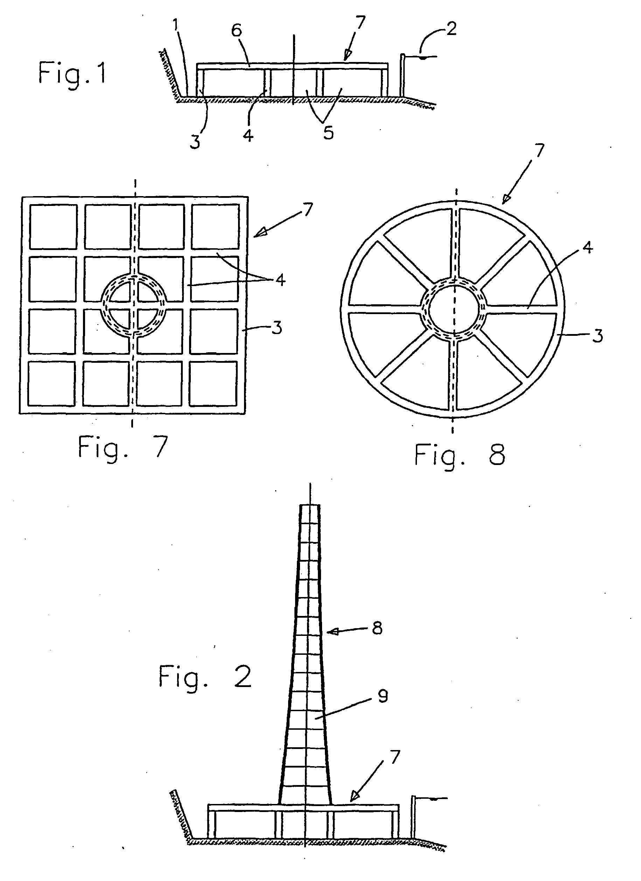

Wie in Fig. 1 schematisch dargestellt, wird das gezeigte Ausführungsbeispiel eines Schwimmfundaments aus Stahlbeton in einem Trockendock betoniert. Der trockengelegte Boden 1 des Trockendocks befindet sich unterhalb der Wasseroberfläche 2. Es werden hierbei mittels nicht dargestellter entsprechender Schalungen zunächst die Rippen des Fundaments betoniert, die die Seitenwand 3 und Zwischenwände 4 bilden, welche mehrere Auftriebskammern 5 voneinander abgrenzen. In der Folge wird die Deckplatte 6 abgeschalt und betoniert. Bei diesem Ausführungsbeispiels eines Schwimmfundaments ist somit ein einzelner Auftriebskörper 7 mit mehreren nach unten offenen Auftriebskammern 5 vorgesehen. In den Fig. 7 und 8 sind mögliche Grundrisse des Auftriebskörpers in eckiger und runder Querschnittsform dargestellt. Die Grundrißform und die Anzahl und Ausbildung der Kammern können sich von den gezeigten Ausführungsbeispielen auch unterscheiden, der Grundriß des Schwimmfundamentes kann rund, polygonal, rechteckig sein, aber auch andere umfangsgeschlossene Formen aufweisen. Obwohl Ausbildungen mit mehreren Auftriebskammern 5 bevorzugt sind (aus Gründen der Sicherheit und der Steuerungsmöglichkeiten), könnte in einer einfachsten Ausführungsform auch lediglich eine einzelne solche Auftriebskammer 5 vorhanden sein.

In der Folge wird der Windturm 8 auf die Deckplatte 6 aufgebaut, wie dies in Fig. 2 schematisch dargestellt ist. Der Windturm 8 verjüngt sich nach oben hin konisch und besteht hier aus einer Mehrzahl von in einzelnen Betonierschritten hergestellten Segmenten 9 (mit von unten nach oben kleineren Durchmessern). Auf die Spitze des betonierten Teils des Windturms 8 kann eine in den Figuren nicht dargestellt Kappe aus Stahlblech angebracht werden, welche ein Windrad trägt.

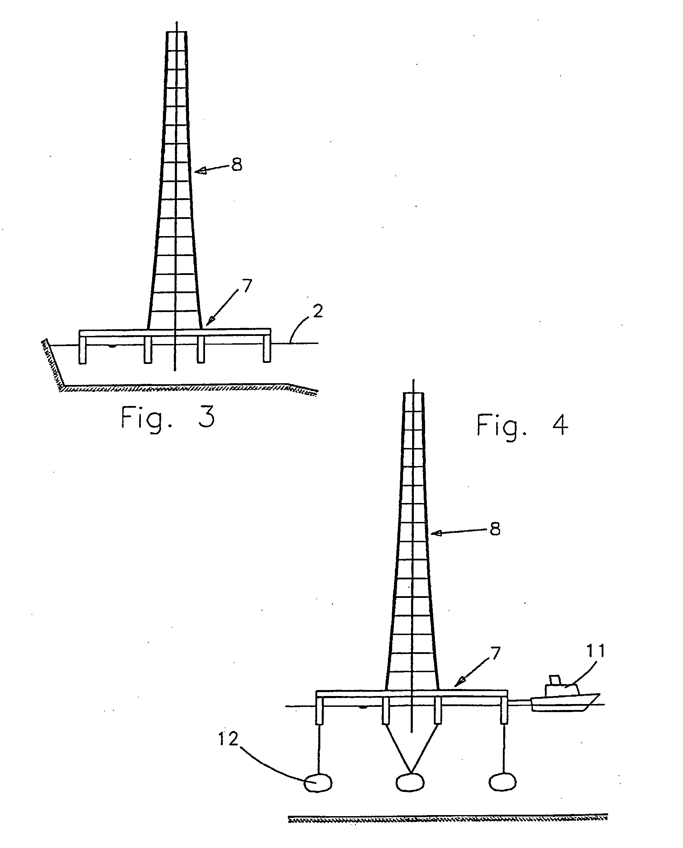

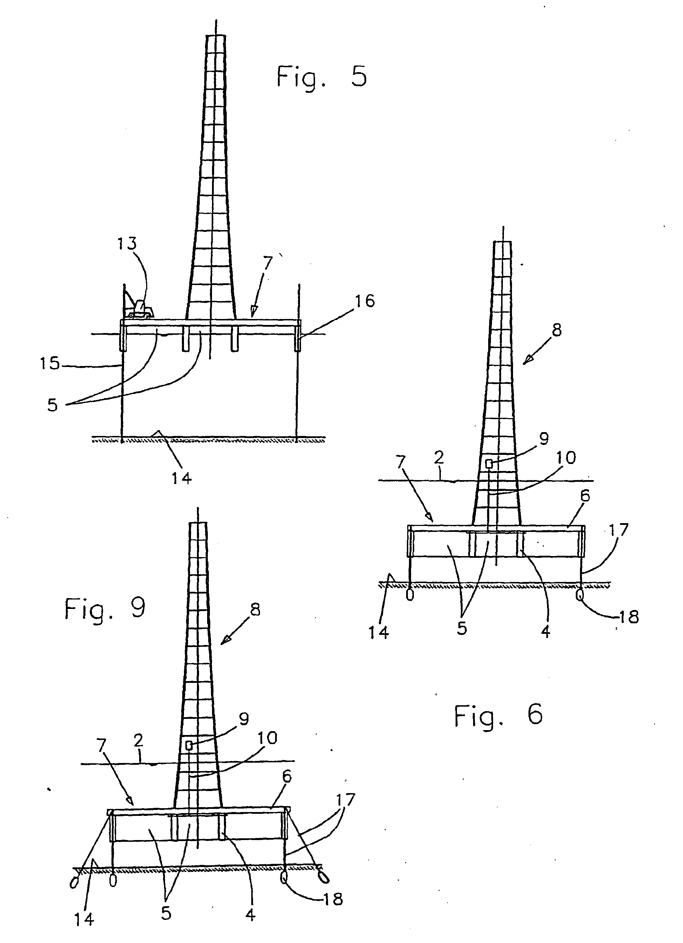

Das Trockendeck wird in der Folge geflutet und der Auftriebskörper 7 des Schwimmfundaments schwimmt an der Wasseroberfläche, wie dies aus Fig. 3 ersichtlich ist. Die in den Auftriebskammern 5 enthaltenen Luftvolumina können dabei durch Zupumpen oder Ablassen von Luft so vergrößert oder verkleinert werden, daß eine stabile Schwimmlage erreicht wird. Zum Zupumpen oder Ablassen von Luft ist eine nur in Fig. 6 schematisch eingezeichnete Steuerungseinrichtung 9 mit in die Auftriebskammern mündenden Rohrleitungen 10 vorgesehen.

Wie aus Fig. 4 ersichtlich ist, wird die Konstruktion in der Folge mittels eines Schiffes 11 an den gewünschten Einsatzort gezogen. Als Kippsicherung können vom Auftriebskörper 7 abgehängte Betonbrocken 12 dienen. Es wären beispielsweise auch Betonscheiben möglich, die nicht nur durch ihr Gewicht, sondern vor allem auch durch ihren großen Strömungswiderstand einer Verkippung der Konstruktion entgegenwirken.

Am Einsatzort angelangt werden mittels Bohrgeräten 13 Bohrungen in den Untergrund 14 eingebracht. Die Bohrvorrichtung 15 kann dabei durch Öffnungen 16 durchgeführt werden, die zu diesem Zweck im Auftriebskörper vorgesehen sind und im Randbereich der Deckplatte 6 diese durchsetzen und durch die Seitenwand 3 verlaufen. Entlang des Umfangs der Deckplatte 6 können eine Mehrzahl solcher Öffnungen 16 vorgesehen sein. Auch in anderen Bereich des Auftriebskörpers 7 können solche Öffnungen 16 vorgesehen sein, insbesondere im Bereich von Zwischenwänden 4. In die Bohrungen im Untergrund werden entsprechende herkömmliche Anker festgelegt, an denen durch die Öffnungen 16 durchgeführte Stangen oder Kabel 17 befestigt sind.

Mittels dieser durch die Öffnungen 16 durchtretenden Stangen oder Kabel (bzw. Trossen) 17 kann der Auftriebskörper 7 in der Folge nach unten unter die Wasseroberfläche gezogen werden. Dies könnte mittels unter Wasser arbeitender Kabelwinden ferngesteuert durchgeführt werden. Auch eine Anbringung von wasserdichten Kabinen oberhalb der Öffnungen 16 und in diesen vorgesehene Arbeitsmaschinen mit Bedienpersonal könnten vorgesehen sein. Um das nach unten ziehen des Auftriebskörpers 7 zu erleichtern, könnte in dieser Phase entsprechend Luft aus den Auftriebskammern 5 abgelassen werden, so daß der insgesamte Auftrieb nur gering ist. Die Luftvolumina in den Auftriebskammern 5 können dabei dem jeweiligen Gesamtauftrieb, in Abhängigkeit von der Tiefe des Auftriebskörpers 7 und der damit verbundenen Eintauchtiefe des Windturmes 8, angepaßt werden. In der in Fig. 6 dargestellten Endlage des Auftriebskörpers 7 werden die Stangen oder Kabel 17 am Auftriebskörper 7 fixiert.

Es könnte das Absenken unter die Wasseroberfläche auch allein durch entsprechendes Ablassen der Luft aus den Auftriebskammern erfolgen (ohne aktiv mittels bereits verankerter Stangen oder Kabel nach unten zu ziehen). In der gewünschten Position wird zunächst ein Schwebezustand eingestellt und die mit dem Auftriebskörper verbundenen Stangen oder Kabel werden auf die gewünschte Länge gebracht.

In der Folge werden die Luftvolumina in den Auftriebskammern 5 mittels der Steuereinrichtung 9 so eingestellt, daß der Auftrieb des Schwimmfundaments um mindestens 10%, vorzugsweise um mindestens 20%, größer ist, als es für die Aufrechterhaltung einer schwimmenden Gleichgewichtsposition des Schwimmfundaments mit dem darauf aufgebauten Windturm in der in Fig. 6 dargestellten Lage bzw. eines Schwebezustandes des Schwimmfundaments in dieser Endlage des Schwimmfundaments erforderlich wäre. Der Auftriebskörper 7 wird somit durch die von den Stangen oder Kabeln 17 und Anker 18 gebildeten Spannvorrichtungen nach unten gegen die Kraft des Auftriebs des Auftriebskörpers 7 vorgespannt. Es ergibt sich auf diese Weise eine Stabilisierung des Schwimmfundaments. Kippkräften, die aus horizontalen Belastungen des Turmes entstehen, wird dadurch entgegegen gewirkt. Die Vorspannung wird günstigerweise so gewählt, daß die maximal auftretende Kippkraft immer kleiner als die vertikale Vorspann-(Niederhalte-)Kraft ist.

Günstigerweise ist der Auftrieb des Schwimmfundamentes so groß, daß bei einem Entfernen der Spannvorrichtungen 17, 18 der Auftriebskörper 7 bis zur Wasseroberfläche aufsteigt.

Bei auf den Windturm einwirkenden Seitenkräften, können in einer besonders vorteilhaften Ausführungsform der Erfindung die Luftvolumina in den einzelnen Auftriebskammern von der Steuereinrichtung 9 so verändert werden, daß einer Verkippung des Auftriebskörpers 7 um eine horizontale Achse eine entsprechende Kraft entgegengesetzt wird. Bei Starkwind kann dadurch durch eine Erhöhung des Luftvolumens auf der dem Windeinfall gegenüberliegenden Seite bzw. durch eine Verminderung des Luftvolumens in einer der Windrichtung zugewandten Auftriebskammer 5 eine Stabilisierung erreicht werden. Im Normalbetrieb kann weiters ein dem Winddruck jeweils entgegenwirkender Gegendruck ausgebildet werden, durch den die vertikale Lage des Windturms 8 im wesentlichen aufrecht erhalten wird.

Ein erfindungsgemäßes Schwimmfundament ist auch bei einem unregelmäßig ausgebildeten Meeresuntergrund einsetzbar, wobei der Untergrund von einem beliebigen ankerungsfähigen Boden gebildet werden kann. Durch eine bodennahe Anbringung des Auftriebskörpers 7 in einem Abstand zum Untergrund von weniger als zehn Metern wird eine stabile Halterung an den Stangen oder Kabeln 17 erreicht, ohne daß große horizontale Versätze des Auftriebskörpers 7 auftreten können, wobei die Stangen oder Kabel 17 im wesentlichen vertikal verlaufen können (d. h. in einem Winkel, der weniger als 20° zur Vertikalen geneigt ist). Grundsätzlich wäre es auch denkbar und möglich, die Stangen oder Kabel 17 in größeren zur Vertikalen geneigten Winkeln vorzusehen oder auch den Auftriebskörper in einem größeren Abstand vom Untergrund festzulegen.

Bei der in Fig. 9 schematisch dargestellten, besonders günstigen Art der Verankerung sind sowohl im wesentlichen vertikal verlaufende Stangen oder Kabel (bzw. Trossen) 17 vorgesehen als auch zur Vertikalen geneigte Stangen oder Kabel (bzw. Trossen) 17. Der Neigungswinkel zur Vertikalen kann dabei beispielsweise im Bereich zwischen 25 und 30° liegen. Es hat sich gezeigt, daß zur Erreichung einer hohen Stabilität gegenüber einer Verkippung der Schwimmplattform im wesentlichen vertikal verlaufende Stangen oder Kabel besonders gut geeignet sind. In einem Winkel zur Vertikalen verlaufende Stangen und Kabel wiederum geben eine Stabilität gegenüber einer seitlichen Versetzung des Schwimmfundaments.

Aufgrund der Positionierung des Schwimmfundaments unterhalb der Wasseroberfläche - ein Abstand zur Wasseroberfläche von mindestens zehn Metern ist bevorzugt (aber nicht zwingend) - bleibt das Schwimmfundament von hauptsächlich im Bereich der Wasseroberfläche vorliegenden Strömungen nahezu unberührt. Auch Schiffe können sich in einem Bereich oberhalb des Schwimmfundaments befinden.

Es könnte auch vorgesehen sein, das Schwimmfundament so nahe über dem Untergrund anzuordnen, daß bei einer durch ein Kippmoment bewirkten Schräglage des Schwimmfundaments von mehr als 15° das Schwimmfundament am Untergrund zur Anlage kommt. Einer weiteren Verkippung des Schwimmfundamentes wird dadurch entgegengewirkt.

Möglich wäre es auch, am Auftriebskörper 7 bis zur Wasseroberfläche reichende Wellenbrechersysteme aufzusetzen, beispielsweise in Form von einzelnen Betonsäulen.

Eine Herstellung des Auftriebskörpers 7 aus Beton hat den Vorteil, daß keine Instandhaltungsarbeiten erforderlich sind. Eine Ausbildung des Windturmes ganz oder teilweise aus Stahl anstelle von Beton wäre denkbar und möglich.

Anstelle eines einzelnen Auftriebskörpers könnte das Schwimmfundament auch mehrere voneinander getrennt ausgebildete Auftriebskörper umfassen, die über das Bauwerk oder über separate Verbindungsmittel miteinander verbunden sind.

Anstelle des gesamten Windturms könnte im Trockendock prinzipiell auch nur ein Teil des Windturmes auf die Deckplatte 6 aufgebaut werden, der beispielsweise den in der Endlage des Schwimmfundaments unter der Wasseroberfläche sich befindenden Teil entspricht, wobei der restliche Teil des Bauwerks erst bei schwimmendem Schwimmfundament, beispielsweise in dessen Endlage aufgesetzt wird.

Die Zeichnungen sind stark schematisiert und die darin wiedergegebenen Dimensionen, beispielsweise der Breite und der Höhe des Auftriebskörpers 7 und der Wandstärken sind nicht maßstabgetreu zu den tatsächlichen Verhältnissen zu verstehen. Beispielsweise könnte ein Fundament für einen Windturm mit einer Höhe im Bereich zwischen achtzig und hundert Metern einen Durchmesser im Bereich von dreißig Metern und eine Höhe im Bereich von fünf Metern aufweisen, wobei die Wandstärke z. B. im Bereich von 0,3 Metern liegen könnte. Das gesamte Luftvolumen im Fundament (ohne Kompression) würde bei diesem Ausführungsbeispiel somit im Bereich zwischen 3000 und 4000 m³ liegen. Diese Zahlen sind lediglich als Beispiel zu verstehen und die Auslegung des Fundaments hängt von unterschiedlichen Parametern ab, wie der Masse des Windturms.

### Legende zu den Hinweisziffern:

- 1: Boden
- 2: Wasseroberfläche
- 3: Seitenwand
- 4: Zwischenwand
- 5: Auftriebskammer
- 6: Deckplatte
- 7: Auftriebskörper
- 8: Windturm
- 9: Steuerungseinrichtung
- 10: Rohrleitung
- 11: Schiff
- 12: Betonbrocken
- 13: Bohrgerät
- 14: Untergrund
- 15: Bohrvorrichtung
- 16: Öffnung
- 17: Kabel
- 18: Anker

## Patentansprüche

1. Schwimmfundament für ein über die Wasseroberfläche aufragendes Bauwerk, insbesondere einen Offshore-Windturm einer Windenergieanlage, wobei das Schwimmfundament mindestens einen Auftriebskörper (7) umfaßt, der sich in der Endlage des Schwimmfundaments vollständig unterhalb der Wasseroberfläche befindet und in dem ein Luftvolumen enthalten ist, und das Schwimmfundament über im Untergrund verankerte Spannvorrichtungen (17,18) nach unten gegen die Kraft des Auftriebs des mindestens einen Auftriebskörpers (7) in seine Endlage vorgespannt ist und wobei der Auftrieb des Schwimmfundaments in seiner nach unten vorgespannten Endlage um mindestens 10%, vorzugsweise um mindestens 20%, größer ist als der für die Aufrechterhaltung eines Schwebezustandes des Schwimmfundaments unter der Gewichtsbelastung des von ihm getragenen Bauwerks in dieser Endlage des Schwimmfundaments erforderliche Auftrieb, **dadurch gekennzeichnet, daß** der Auftriebskörper (7) aus Stahlbeton besteht und mindestens eine ein Luftvolumen enthaltende nach unten offene Auftriebskammer (5) aufweist.

2. Schwimmfundament nach Anspruch 1, **dadurch gekennzeichnet, daß** mehrere nach unten offene Auftriebskammern (5) vorgesehen sind.

3. Schwimmfundament nach Anspruch 1 oder Anspruch 2, **dadurch gekennzeichnet, daß** eine Steuerungseinrichtung vorgesehen ist, mit der die Luftvolumina zumindest in einigen der Auftriebskammern (5) getrennt veränderbar sind.

4. Schwimmfundament nach einem der Ansprüche 1 bis 3, **dadurch gekennzeichnet, daß** die Spannvorrichtungen von Stangen oder Kabeln (17) gebildet werden, die über Anker (18) im Untergrund (14) verankert sind.

5. Schwimmfundament nach Anspruch 4, **dadurch gekennzeichnet, daß** die Stangen oder Kabel (17) durch Öffnungen (16) verlaufen, welche Wandungen des Auftriebskörpers (7) durchsetzen.

6. Schwimmfundament nach Anspruch 4 oder Anspruch 5, **dadurch gekennzeichnet, daß** sowohl Stangen oder Kabel (17), die im wesentlichen vertikal verlaufen, als auch Stangen oder Kabel (17) vorgesehen sind, die gegenüber der Vertikalen geneigt sind, wobei der Neigungswinkel vorzugsweise in einem Bereich zwischen 25 und 45° liegt.

7. Schwimmfundament nach einem der Ansprüche 1 bis 6, **dadurch gekennzeichnet, daß** der Abstand des Auftriebskörpers (7) zur Wasseroberfläche in der Endlage des Schwimmfundaments mindestens zehn Meter beträgt.

8. Schwimmfundament nach einem der Ansprüche 1 bis 7, **dadurch gekennzeichnet, daß** der Abstand des Schwimmfundaments zum Untergrund in der Endlage des Schwimmfundamentes weniger als zehn Meter beträgt.

9. Schwimmfundament nach Anspruch 8, **dadurch gekennzeichnet, daß** das Schwimmfundament so nahe über dem Untergrund angeordnet ist, daß bei einer durch ein Kippmoment bewirkten Schräglage des Schwimmfundaments von mehr als 15° ein Seitenrand des Schwimmfundaments am Untergrund zur Anlage kommt.

10. Verfahren zur Herstellung eines Schwimmfundaments für ein über die Wasseroberfläche aufragendes Bauwerk, insbesondere eines Offshore-Windturmes einer Windenergieanlage, **dadurch gekennzeichnet, daß** in einem Trockendock mindestens ein Auftriebskörper (7) aus Stahlbeton hergestellt wird, der mindestens eine nach unten offene Auftriebskammer (5) aufweist, wobei auf den Auftriebskörper (7) in der Folge zumindest ein Teil des Bauwerkes aufgebaut wird, daß das Trockendock in der Folge geflutet wird und daß der Auftriebskörper mit dem darauf aufgebauten Bauwerk bzw. Teil des Bauwerks an den Einsatzort geschleppt wird, und daß in der Folge mittels im Untergrund verankerten Spannvorrichtungen (17, 18) das Schwimmfundament in eine Endlage unterhalb der Wasseroberfläche nach unten vorgespannt wird, wobei der Auftrieb des Schwimmfundaments in der nach unten vorgespannten Endlage mindestens 10%, vorzugsweise um mindestens 20%, größer ist als der für die Aufrechterhaltung eines Schwebezustandes des Schwimmfundaments unter der Gewichtsbelastung des von ihm getragenen Bauwerks in dieser Endlage des Schwimmfundaments erforderliche Auftrieb.

## Claims

1. A floating base for a structure projecting above the water surface, in particular an offshore wind tower of a wind energy plant, wherein the floating base comprises at least one buoyancy body (7) which in the end position of the floating base is located completely below the water surface and in which a volume of air is contained, and the floating base is pretensioned downwards into its end position against the force of the buoyancy of the at least one buoyancy body (7) via tensioning devices (17, 18) anchored in the substratum and wherein the buoyancy of the floating base in its downwardly-pretensioned end position is greater by at least 10%, preferably by at least 20%, than the buoyancy required in this end position of the floating base to maintain a suspended state of the floating base in the presence of the weight load of the structure borne by it, **characterised in that** the buoyancy body (7) is composed of armoured concrete and has at least one downwardly-open buoyancy chamber (5) containing a volume of air.

2. A floating base according to claim 1, **characterised in that** a plurality of downwardly-open buoyancy chambers (5) are provided.

3. A floating base according to claim 1 or claim 2, **characterised in that** a control device is provided by means of which the air volumes in at least some of the buoyancy chambers (5) can be altered separately.

4. A floating base according to any one of claims 1 to 3, **characterised in that** the tensioning devices are formed by rods or cables (17) anchored in the substratum (14) via anchors (18).

5. A floating base according to claim 4, **characterised in that** the rods or cables (17) run through openings (16) which pass through walls of the buoyancy body (7).

6. A floating base according to claim 4 or claim 5, **characterised in that** both rods or cables (17) running substantially vertically and rods or cables (17) at an incline to the vertical are provided, wherein the angle of inclination preferably lies in a range between 25 and 45°.

7. A floating base according to any one of claims 1 to 6, **characterised in that** in the end position of the floating base, the distance of the buoyancy body (7) from the water surface is at least ten metres.

8. A floating base according to any one of claims 1 to 7, **characterised in that** in the end position of the floating base, the distance of the floating base from the substratum is less than 10 metres.

9. A floating base according to claim 8, **characterised in that** the floating base is arranged so closely above the substratum that when the floating base is in an inclined position of more than 15° brought about by a tilting moment, a lateral edge of the floating base comes to rest against the substratum.

10. A method of producing a floating base for a structure projecting above the water surface, in particular an offshore wind tower of a wind energy plant, **characterised in that** at least one buoyancy body (7) of armoured concrete is produced in a dry dock, which buoyancy body (7) has at least one downwardly-open buoyancy chamber (5), wherein subsequently at least part of the structure is assembled onto the buoyancy body (7), **in that** the dry dock is subsequently flooded, and **in that** the buoyancy body with the structure or part of the structure assembled thereon is towed to the utilisation site, and **in that** subsequently the floating base is downwardly pretensioned into an end position below the water surface by means of tensioning devices (17, 18) anchored in the substratum, wherein the buoyancy of the floating base in the downwardly-pretensioned end position is greater by at least 10%, preferably by at least 20%, than the buoyancy required in this end position of the floating base to maintain a suspended state of the floating base in the presence of the weight load of the structure borne by it.

## Revendications

1. Plate-forme flottante pour un ouvrage s'élevant au-dessus de la surface de l'eau, en particulier pour un mât d'une installation éolienne offshore, la plate-forme flottante comportant au moins un flotteur (7) qui, dans la position finale de la plate-forme flottante, se situe entièrement sous la surface de l'eau et qui contient un volume d'air, et la plate-forme flottante étant précontrainte vers le bas dans sa position finale, par l'intermédiaire de dispositifs de tension (17, 18) ancrés dans le sous-sol, à l'encontre de la force ascensionnelle dudit au moins un flotteur (7) et la force ascensionnelle de la plate-forme flottante dans sa position finale précontrainte vers le bas étant supérieure de 10 % au moins, de préférence de 20 % au moins, à la force ascensionnelle nécessaire dans cette position finale de la plate-forme flottante pour maintenir un état de flottement de la plate-forme flottante sous la sollicitation du poids de l'ouvrage qu'elle porte, **caractérisée en ce que** le flotteur (7) est réalisé en béton armé et comporte au moins une chambre de poussée (5) ouverte vers le bas, contenant le volume d'air.

2. Plate-forme flottante selon la revendication 1, **caractérisée en ce qu'**il est prévu plusieurs chambres de poussée (5) ouvertes vers le bas.

3. Plate-forme flottante selon la revendication 1 ou 2, **caractérisée en ce qu'**il est prévu un dispositif de commande, qui permet de faire varier séparément les volumes d'air au moins dans certaines des chambres de poussée (5).

4. Plate-forme flottante selon l'une quelconque des revendications 1 à 3, **caractérisée en ce que** les dispositifs de tension sont formés par des tiges ou câbles (17), qui sont ancrés dans le sous-sol (14) au moyen de tirants d'ancrage (18) .

5. Plate-forme flottante selon la revendication 4, **caractérisée en ce que** les tiges ou câbles (17) passent à travers des orifices (16), qui traversent des parois du flotteur (7).

6. Plate-forme flottante selon la revendication 4 ou 5, **caractérisée en ce qu'**il est prévu des tiges ou câbles (17) qui s'étendent sensiblement verticalement, de même que des tiges ou câbles (17) qui sont inclinés par rapport à la verticale, l'angle d'inclinaison se situant de préférence dans une plage entre 25 et 45°.

7. Plate-forme flottante selon l'une quelconque des revendications 1 à 6, **caractérisée en ce que** la distance entre le flotteur (7) et la surface de l'eau dans la position finale de la plate-forme flottante est de l'ordre de dix mètres au moins.

8. Plate-forme flottante selon l'une quelconque des revendications 1 à 7, **caractérisée en ce que** la distance entre la plate-forme flottante et le sous-sol dans la position finale de la plate-forme flottante est inférieure à dix mètres.

9. Plate-forme flottante selon la revendication 8, **caractérisée en ce que** la plate-forme flottante est disposée à une si faible distance au-dessus du sous-sol qu'un bord latéral de la plate-forme flottante vient en contact avec le sous-sol lorsque la plate-forme flottante est dans une position inclinée de plus de 15° sous l'effet d'un moment de basculement.

10. Procédé de réalisation d'une plate-forme flottante pour un ouvrage s'élevant au-dessus de la surface de l'eau, en particulier un mât d'une installation éolienne offshore, **caractérisé en ce qu'**au moins un flotteur (7) en béton armé est réalisé dans une cale sèche, lequel comporte au moins une chambre de poussée (5) ouverte vers le bas, sachant qu'au moins une partie de l'ouvrage est construite ensuite sur le flotteur (7), **en ce que** la cale sèche est ensuite amenée à l'eau et **en ce que** le flotteur, avec l'ouvrage ou une partie de l'ouvrage construit sur celui-ci, est remorqué jusqu'au lieu d'implantation, et **en ce que**, ensuite, au moyen de dispositifs de tension (17, 18) ancrés dans le sous-sol, la plate-forme flottante est précontrainte vers le bas dans une position finale en dessous de la surface de l'eau, la force ascensionnelle de la plate-forme flottante dans la position finale précontrainte vers le bas étant supérieure de 10 % au moins, de préférence de 20 % au moins, à la force ascensionnelle nécessaire dans cette position finale de la plate-forme flottante pour maintenir un état de flottement de la plate-forme flottante sous la sollicitation du poids de l'ouvrage qu'elle porte.
